# EUROPEAN PATENT APPLICATION

(11) **EP 4 603 988 A1**
(43) Date of publication of application: **20.08.2025**
(21) Application number: 24158418.4
(22) Date of filing: 19.02.2024
(51) Int. Cl.: G06F 16/901

(54) **DEVICE AND METHOD FOR GENERATING A GRAPH REPRESENTATION FROM A 3-DIMENSIONAL POINT CLOUD**

(71) Applicant: Robert Bosch GmbH, 70442 Stuttgart (DE)
(72) Inventor: Koch, Sebastian, 70197 Stuttgart (DE); Colosi, Mirco, 70597 Stuttgart (DE); Vaskevicius, Narunas, 71272 Renningen (DE)

(57) **Abstract**

Method for training a first machine learning system (10) for generating a graph representation of objects and their relationships in a 3D environment scene from 3D point cloud input data (*P*). For each object *i* and each pair of objects *i* and *j* in the scene initial node feature vectors ϕᵢ and initial edge feature vectors ϕᵢⱼ are determined from the point cloud input data (*P*) and are arranged in an initial graph structure (*ϕᵢ*, *ϕᵢⱼ, ϕᵢ*). A refined graph structure (11) is determined by a graph neural network (10). From 2-dimensional image sensor data (2, 3) of the environment scene, feature vectors (21) of objects *i* are determined by a second machine learning system (20) and feature vectors (31) of object pairs *i* and *j* are determined by a third machine learning system (30). Parameters of the first machine learning system (10) are adjusted with respect to a training objective defined by an optimization of a difference between the refined node feature vector (12) of object *i* and the corresponding feature vector (21) of object *i* and/or an optimization of a difference between refined edge feature vector (13) of object *i* and *j* and the corresponding feature vector (31) of object pair *i* and *j*.

## Description

### Technical field

The invention relates to a method of training a machine learning system for generating a graph representation of instances and their relationships in a 3-dimensional environment scene from 3-dimensional point cloud input data, a corresponding computer program and a machine-readable storage medium.

### Technical background

3-dimensional scene graphs are an emergent graph-based representation facilitating various 3D scene understanding tasks. An advantage of 3-dimensional scene graphs is the ability to represent relationships between scene entities, e.g. instance objects in an indoor scene such as a setting in a closed building or enclosed space such as a room, or an outdoor scene. The exploitation of 3-dimensional scene graphs in e.g., navigation task, decision making or task planning in robotics is, however, limited by their availability.

### Prior art

Due to their complexity and high-level abstraction, predicting 3-dimensional scene graphs may be hard for learned models relying on a small-scale training data set comprising instances and relationships between the instances. To address this issue, open-vocabulary training settings relying on vision-language models (VLMs) such as CLIP (https://arxiv.org/abs/2103.00020) have been proposed, which may allow handling and generating words and descriptions for objects and their inter-relations that are not restricted to a fixed vocabulary. In https://arxiv.org/abs/2309.15940 an implicit scene graph representation for planning navigation task is proposed, relying on human input in the determination of relationships between instances in the graph. Another approach, https://arxiv.org/abs/2309.16650, for instance relies on 2-dimensional VLMs in order to process input data at inference time.

### Disclosure of the invention

According to a first aspect, the invention relates to a method of training a first machine learning system for generating a graph representation of instances and their relationships in a 3-dimensional environment scene from 3-dimensional point cloud input data P. A graph representation may be a data structure that represents instances and their relationships in a (3-dimensional) environment scene. The graph representation may comprise nodes and edges, wherein the nodes may refer to or may represent instances. The edges may connect two nodes, respectively, wherein an edge may refer to/represent/indicate a relationship between the two instances associated with the nodes that are connected by the respective edge. An instance may be an object in a (3-dimensional) environment scene and a pair of instances may be a pair of objects in that scene. 3-dimensional point cloud input data may be a collection/group of data points referring to an environment scene, wherein each data point has three spatial coordinates. The first machine learning system comprises two preprocessing networks and a graph neural network. The two preprocessing networks may be given by a PointNet, https://arxiv.org/abs/1612.00593, respectively. Preferably, the two preprocessing networks may be point-encoding networks, which may take 3-dimensional point clouds as input and may determine feature vectors for instances and/or pairs of instances represented by a (sub)set of points in the 3-dimensional input point cloud. Generally speaking, in the context of the invention presented herein, a feature vector may be an embedding. An embedding may be a representation of (a subset of) input data, e.g. 3-dimensional point cloud or 2-dimensional image sensor data, in a lowerdimensional space. An embedding may be given by a mathematical transformation that maps input data into a vector space, where each dimension of a vector in said vector space represents a specific feature or characteristic of the input data. The method comprises the following steps. In a method step, an initial node feature vector ϕᵢ is determined from the point cloud input data P by the first preprocessing network for each instance *i* in the scene. Further, an initial edge feature vector ϕᵢⱼ is determined from the point cloud input data by the second preprocessing network for each pair of instances *i* and *j* in the scene. An (initial) node feature vector may encode features of an instance and an (initial) edge feature vector may encode features of a pair of instances. In other words, features of a pair of instances may be given by a relationship among or between the respective two instances of the instance pair. A feature of an instance pair *i* and *j* may be a spatial, comparative and/or a semantic relationship between these two instances *i* and *j*. In a further method step, the initial node and initial edge feature vectors are arranged in an initial graph structure by building triplets (*ϕᵢ, ϕᵢⱼ, ϕⱼ*). In a following method step a refined graph structure is determined by the graph neural network based on the initial graph structure. The refined graph structure comprises refined node feature vectors and refined edge feature vectors. The graph neural network may process and refine the edge feature vectors as well as the node feature vectors and may project them into a latent space suitable for a training objective defined in the following. In a further method step a feature vector of instance *i* for each instance *i* in the scene is determined by a second machine learning system from 2-dimensional image sensor data. The 2-dimensional image sensor data refers to the 3-dimensional environment scene. In other words, the 2-dimensional image sensor data are aligned with the 3-dimensional environment scene. The 2-dimensional image sensor data may hence depict/show the same shapes, poses and/or perspectives of the instances and instance pairs in the scene that may be comprised in the 3-dimensional point cloud input data. The second machine learning system may be a vision-language model (VLM). A VLM may be trained on large datasets containing pairs of different modalities describing the same context, e.g. images and corresponding textual descriptions. During training, a VLM may learn mapping the embeddings of different modalities (such as text and images) into a shared vector space. Similar or related concepts from different modalities may be represented by similar or nearby vectors in the shared space. Furthermore, for each pair of instances *i* and *j* a feature vector of instance pair *i* and *j* is determined in a further step from the 2-dimensional image sensor data by a third machine learning system. The third machine learning system may be a VLM as well. In a further method step, parameters of the first machine learning system are adjusted with respect to a training objective, wherein the training objective is defined by an optimization of a difference between the refined node feature vector of instance *i* and the corresponding feature vector of instance *i* for all instances and/or an optimization of a difference between the refined edge feature vectors of instance *i* and *j* and the corresponding feature vectors of instance pair *i* and *j* for all instance pairs *i* and *j*. Preferably, the training objective comprises minimizing a loss function based on a cosine similarity loss, wherein a cosine similarity between a refined node feature vector of instance *i* and the corresponding feature vector of instance *i* for all instances shall be maximized and/or a cosine similarity between a refined edge feature vector of instance *i* and *j* and the corresponding feature vector of instance pair *i* and *j* for all instance pairs shall be maximized.

Advantageously, the method proposed herein allows to predict/construct graph representations of instances and their relations in a 3-dimensional environment scene directly from 3-dimensional point cloud input data. These data may be acquired by a LiDAR sensor or a RADAR sensor and may directly, or after a preprocessing to, e.g., remove artifacts in the raw data, be processed by the first machine learning system to construct a refined graph structure, wherein the refined graph structure may encode instances and relations among the instances in a 3-dimensional environment scene. This allows determining a graph structure when only 3-dimensional point cloud data from a sensor are available. Further, a first machine learning system trained according to a method described herein does not require computationally expensive VLM at inference time to construct 3D maps of a 3-dimensional environment scene from 2-dimensional (video) camera data. In addition, explicit semantic relationships may be predicted as part of the proposed method, wherein storing multiple options per edge describing the relationship may become obsolete.

Preferably, the first and the second preprocessing networks may comprise PointNets. A PointNet, https://arxiv.org/abs/1612.00593, may take a 3-dimensional point cloud as input and determine an embedding based on the input point cloud. In a preprocessing step, point clouds Pᵢ or Pᵢⱼ comprising subgroups of the points of an input point cloud P and referring to instance *i* or pair of instances *i* and *j*, respectively, may be extracted from the input point cloud P by using instance masks Mᵢ. The preprocessing of the 3-dimensional point cloud P into point clouds Pᵢ may be performed with an instance segmentation method, such as Mask3D[https://arxiv.org/abs/2210.03105]. A point cloud Pᵢⱼ may then be determined by selecting all points falling within the union of their respective bounding boxes. A PointNet may then receive point clouds Pᵢ and determine corresponding initial node feature vectors from these point clouds. Every point cloud Pᵢⱼ may be concatenated with a mask which may be equal to 1 if the respective point corresponds to instance *i*, 2 if the point corresponds to instance *j* and 0 otherwise. The concatenated point cloud Pᵢⱼ may then be received by a PointNet to determine initial edge feature vectors corresponding to and/or encoding relationships between instances.

Preferably, the second machine learning system may be an OpenSeg [https://arxiv.org/abs/2112.12143 ] model and the third machine learning system may be an InstructBLIP [https://arxiv.org/abs/2305.06500] model. It may be advantageous to use an OpenSeg model as second machine learning system, because it provides language-aligned feature embeddings for each pixel in the image sensor data. InstructBLIP may be especially suited as third machine learning system due to its aligned image data encoder with its language output decoder. In this way relationships between instance pairs *i* and *j* may be encoded and, in consequence, extracted/predicted by the method described herein at a level with good compositional understanding of the scene and especially the relation between the instances of an instance pair *i* and *j*.

Preferably, the 3-dimensional point cloud input data are acquired with a LiDAR sensor, a RADAR sensor, a camera with a depth sensor or video-camera with a depth sensor. In the case where the 3-dimensional point cloud data are acquired with a LiDAR or RADAR sensor, these data may be used directly or after preprocessing for, e.g., removing artifacts in the data, as input data. In case of (video) camera sensor data with depth information, a processing of these images is necessary in order to convert the data to 3-dimensional point cloud input data.

Preferably, the method may further comprise the step of controlling a robot based on the refined graph structure, wherein the refined node feature vectors and refined edge feature vectors shall be determined by the first machine learning system after adjusting parameters of first machine learning system with respect to the training objective. Examples for a robot comprise industrial robots used in manufacturing, at least partly autonomous vehicles and household or garden robots for cleaning or mowing.

Preferably, the step of determining by the second machine learning system for each instance *i* in the scene a feature vector of instance *i* from the 2-dimensional image sensor data as an input may comprise the following sub-steps for each instance *i*. In a sub step, a set of *k* image sensor data comprising instance *i* may be determined from the 2-dimensional image sensor data. Preferably, instance *i* as a whole is visible to a high percentage in each of the *k* image sensor data. Accordingly, the k image sensor data may be chosen as the image sensor data with the highest percentage of visibility of instance *i* within all image sensor data. In a next sub step, a feature vector of instance *i* may be determined from each of the *k* image sensor data comprising instance *i*. Finally, a feature vector of instance *i* may be obtained by averaging the *k* determined feature vectors of instance *i*.

Preferably, determining by the third machine learning system for each pair of instances *i* and *j* a feature vector of instance pair *i* and *j* from the 2-dimensional image sensor data comprises the following sub-steps. In a first step a set of *m* image sensor data is determined comprising the instance pair *i* and *j* from the 2-dimensional image sensor data. The *m* image sensor data may be determined as the sensor data with the highest visibility of both instances *i* and *j* out of all image sensor data. Further, bounding boxes for instance *i* and instance *j* are determined in each of the *m* image sensor data comprising the instance pair *i* and *j*. In a next step, each of the *m* image sensor data with the bounding boxes for instance *i* and instance *j* are cropped at *n* different scales to obtain, for each of the *m* image sensor data, *n* different cropped image sensor data. Thereby, each of the cropped image sensor data may comprise the bounding boxes of instance *i* and instance *j*. In a next step a feature vector of instance pair *i* and *j* is determined from each of the *n* different cropped image sensor data. Finally, a feature vector of instance pair *i* and *j* is obtained by first averaging the *n* feature vectors from the *n* different cropped image sensor data for each of the *m* image sensor data to obtain *m* averaged feature vectors of instance pair *i* and *j* and then averaging the *m* obtained feature vectors of instance pair *i* and *j*.

Using *n* different cropped sensor data may be beneficial to encode and extract important context information for a relation between the instances from the sensor data in order to determine a relationship between these two instances.

Preferably, the refined node feature vectors and the refined edge feature vectors of the refined graph structure are re-determined after adjusting parameters of the first machine learning system with respect to the training objective. This step may be carried out at inference of the first machine learning system, after training the first machine learning system subject to the training objective according to the previously described method steps. In other words, the trained first machine learning system may at inference time determine refined node feature vectors and refined edge feature vectors from 3-dimensional point cloud input data. Further, a list of candidate instances may be provided, wherein each element of the list of candidate instances is a word or a text describing a possible instance in a 3-dimensional environment scene. A possible instance may not be comprised in an actual 3-dimensional environment scene but may be an instance that typically may occur in 3-dimensional scenes. For instance, in indoor environments, possible instances may be, among others, chair, table, bed, floor, etc., which may be part of the environment in a room or another closed environment. Furthermore, a fourth machine learning system, a third preprocessing network and a fifth machine learning system may be provided. The third preprocessing network may be a QFormer (https://arxiv.org/abs/2301.12597) network. A QFormer network is well suited to translate the features into token-space of the fifth machine learning system. The fourth machine learning system and the first machine learning system shall map their respective input data to the same embedding space. In other words, the first and the fourth machine learning system shall share the same embedding space. The first machine learning system may receive 3-dimensional point cloud data as an input and may be trained by the training objective to map these input data to a lower dimensional vector representation in a corresponding embedding space, whereas the fourth machine learning system may receive word or text as input and map that input to the same embedding space. Accordingly, also the second machine learning system and the third machine learning system map their respective input data to the same embedding space as the fourth machine learning system. The fourth machine learning system may be a CLIP model. The method may further comprise the following steps. In a step an embedding for each element of the list of candidate instances is determined by the fourth machine learning system. The list of candidate instances may be determined by a user, wherein the user may input the list of candidate instances at an interface and the input list may be provided as an input to the fourth machine learning system. Alternatively, or in addition, the list of candidate instances or a part of the list of candidate instances may be predefined in terms of a hard-coded list of words or text defining possible instances in an environment scene, wherein the hard-coded list may be provided as an input to the fourth machine learning system. In a further step, a graph structure with labeled nodes may be determined based on the refined graph structure. This may be achieved by assigning for each refined node feature vector with corresponding node in the refined graph structure an element of the candidate list to the corresponding node of the refined node feature vector, wherein the assigned element may be a label of the corresponding node. The assignment may be based on the highest similarity between the refined node feature vector and the embeddings of the elements of the candidate list. In other words, an element of the list may be selected and assigned as a label to a respective node, if its embedding has the highest similarity/smallest difference to the refined node feature vector corresponding to the respective node. As a measure for highest similarity/smallest difference, a cosine similarity scoring between the node feature vectors and the text embeddings from the list may be used. The element of the list with the highest cosine similarity may be the assigned to the node, thereby providing a prediction for the node, wherein the prediction refers to the type or class of instance associated with the node. In a further method step, the third preprocessing network may determine input tokens based on the refined edge feature vectors, a predefined query and relationship prompts. A relationship prompt may comprise the labels that are assigned to the nodes connected by the respective edge in the graph structure with labelled nodes. Based on the determined input tokens, the predefined query and the relationship prompts, the fifth machine learning system may determine in a further step a textual description for each refined edge feature vector. In a next step, a scene graph may be determined from the graph structure with labelled nodes by assigning the determined textual description for each refined edge feature vector to the respective edge of the graph structure with labelled nodes.

The aforementioned proposed method allows to determine a scene graph with instances in a 3-dimensional scene as nodes and a relationships between an instance pair in the scene as edge between two nodes by a two-step prediction. In a first step, instance text labels, i.e. a textual description of an object in the scene in terms of a word or a few words, may be determined. The textual description, i.e. the word or the few words describing an object/instance in the scene, may also be referred to as instance class. In a second step, inter-instance relations may be predicted/determined by providing the edge feature vector, encoding a relationship between the instances for a given instance pair, and the previously determined instance labels as context for a large language model (LLM). Predicting relationships between instances requires compositional understanding of a scene. This issue is approached by the proposed method by leveraging the generative abilities of a pretrained LLM, which may have a good compositional understanding of an environment scene and may be queried to give a textual description for the relation of instances in the scene.

Preferably, a relationship between two instances may be a spatial, supportive, semantic and/or comparative relationship.

Preferably, the method may further comprise the step of validating the scene graph by a user and/or controlling a robot based on the scene graph.

According to a further aspect, the invention relates to a system configured to carry out the method according to steps and/or features described above.

According to a further aspect, the invention relates to a computer program with machine-readable instructions, which, when executed on one or several computer(s), cause the computer(s) to perform one of the computer-implemented methods described above and below. Furthermore, according to another aspect, the invention relates to a machine-readable storage medium, on which the above computer program is stored.

Embodiments of the invention will be discussed with reference to the following figures in more detail. The figures show:
- Figure 1: shows an exemplary information flowchart for an embodiment of a method of training a first machine learning system for generating a graph representation of instances and their relationships in a 3-dimensional environment scene;
- Figure 2: shows another flowchart for a further embodiment of a method described herein;
- Figure 3: shows another flowchart for a further embodiment;
- Figure 4: shows another flow chart for a further embodiment;
- Figure 5: shows another flow chart for a further embodiment;
- Figure 6: shows a flow chart of a method according to an embodiment;
- Figure 7: a system configured to carry out a method according to embodiments described herein;

### Description of the embodiments

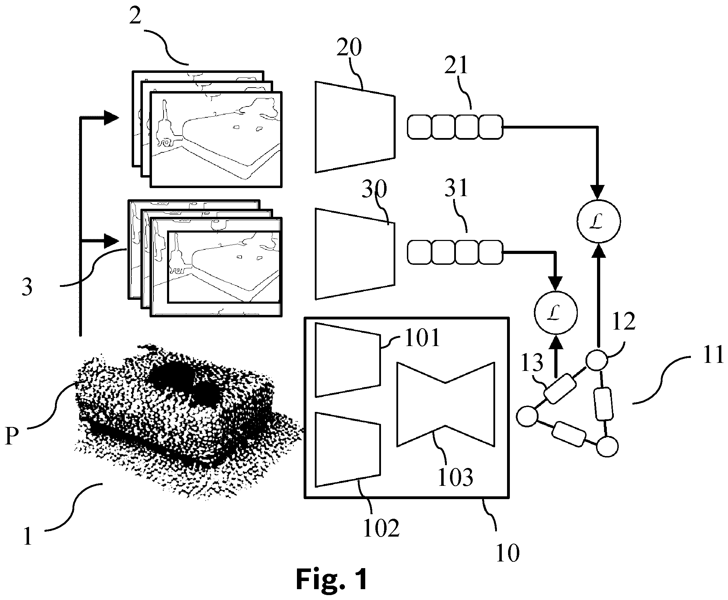

Figure 1 shows a flow chart for an embodiment of a method of training a first machine learning system 10 for generating a graph representation of instances and their relationships in a 3-dimensional environment scene 1 from 3-dimensional point cloud input data *P*. First machine learning system 10 comprises preprocessing network 101 and preprocessing network 102, which may be given by PointNets. First machine learning system 10 further comprises a graph neural network 103.

The first preprocessing network 101 may determine for each instance *i* in the scene 1 an initial node feature vector ϕᵢ from the point cloud input data P. Second preprocessing network 102 may determine for each pair of instances *i* and *j* in the scene 1 an initial edge feature vector from the point cloud input data P. Initial node and initial edge feature vectors may be arranged in an initial graph structure by building triplets (*ϕᵢ*, *ϕᵢⱼ, ϕj*) and a refined graph structure 11 comprising refined node feature vectors 12 and refined edge feature vectors 13 may be determined by graph neural network 103 based on the initial graph structure. Second machine learning system 20 may determine for each instance *i* in the scene a feature vector 21 of instance *i* from 2-dimensional image sensor data 2. The 2-dimensional image sensor data may be aligned to the 3-dimensional point cloud input data P of the environment scene 1. Third machine learning system 30 may determine for each pair of instances *i* and *j* a feature vector 31 of instance pair *i* and *j* from the 2-dimensional image sensor data 3. 2-dimensional image sensor data 2 and 3 may be the same data showing instances in the same pose and the same perspective. However, image sensor data 3 may also be cropped with respect to image sensor data 2.

Parameters of the first machine learning system 10 may be adjusted with respect to a training objective, wherein the training objective may be defined by a cosine similarity loss. More generally speaking, the training objective may be defined by an optimization of a difference between the refined node feature vector 12 of instance *i* and the corresponding feature vector 21 of instance *i* for all instances and/or an optimization of a difference between refined edge feature vector 13 of instance *i* and *j* and the corresponding feature vector 31 of instance pair *i* and *j* for all instance pairs.

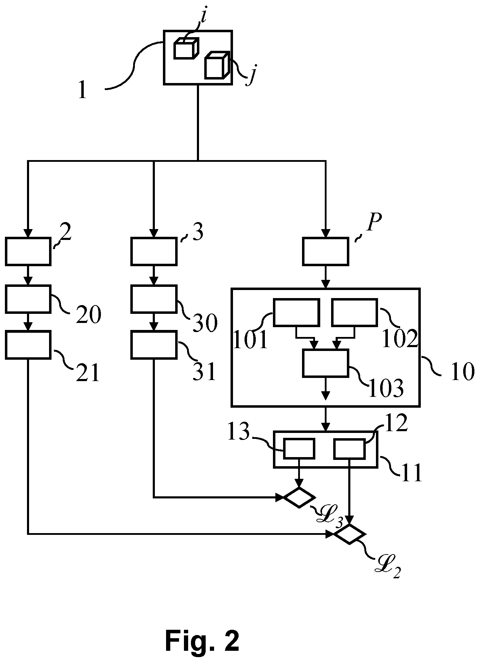

Figure 2 shows a flowchart of an embodiment of a computer-implemented method of training a first machine learning system 10 for generating a graph representation 11 of instances and their relationships in a 3-dimensional environment scene 1 from 3-dimensional point cloud input data P. The 3-dimensional point cloud input data P may be provided with class-agnostig instance annotation. In this context, "class-agnostic instance annotation" indicates that the point cloud input data P may be grouped by instances in the point cloud but no class-labels are known for the instance-wise grouped points. Accordingly, classes of the instances may not be known at this point, but it may be known which points group together to form an instance. First machine learning system 10 may serve the purpose of determining a graph representation 11 from the input point cloud *P*. First machine learning system 10 may comprise first and second preprocessing networks 101 and 102 and a graph neural network 103. First and second preprocessing networks 101 and 102 may serve as point encoders that determine feature vectors for instances *i* and j (case of network 101) and instance pairs *i,j* (case of network 102). First and second preprocessing network 101 and 102 may share the same network architecture. First and second perprocessing network 101 and 102 may be PointNets. However, networks 101 and 102 may share the same architecture, but weights may not be shared. First preprocessing network 101 may determine for each instance *i* in the scene an initial node feature vector ϕᵢ from the point cloud input data *P*. Similarly, second preprocessing network 102 may determine for each pair of instances *i* and *j* in the scene an initial edge feature vector from the point cloud input data *P*. Determined initial node and initial edge feature vectors may be arranged in an initial graph structure by building triplets (*ϕᵢ*, *ϕᵢⱼ, ϕⱼ*) and may be provided as an input to the graph neural network 103. Graph neural network 103 may determine a refined graph structure comprising refined node feature vectors 12 and refined edge feature vectors 13 based on the initial graph structure. In other words, the inital node and edge feature vectors may be processed and refined by graph neural network 103 and graph neural network 103 may project the initial node and edge feature vectors to refined node 12 and edge 13 feature vectors. Turning to the left hand site of Figure 2, second machine learning system 20 may determine for each instance *i* in the scene a feature vector 21 of instance *i* from 2-dimensional image sensor data 2. Second machine learning system 20 may be a vision-language model that maps image sensor data into an embedding space. A VLM may map image sensor data as well as textual input data into a joint embedding space, wherein image and text input data showing/describing the same context/sujet are mapped to feature vectors with a high similarity score, i.e., e.g. a high cosine similarity. Preferably, second machine learning system 20 is given by an OpenSeg model. Feature vector 21 of instance *i* may be also referred to as vision-feature embedding of instance *i*. Third machine learning system 30 may determine for each pair of instances *i* and *j* a feature vector of instance pair *i* and *j* from the 2-dimensional image sensor data 3. Preferably, third machine learning system 30 is given by a vision language model such as, e.g., BLIP/InstructBLIP. Feature vector 31 of instance pair *i* and *j* may also be referred to as vision-feature embedding of instance pair *i*, *j*. 2-dimensional image sensor data 2 and 3 shall be aligned with the 3-dimensional environment scene, by projecting the 3-dimensional environment scene into the image sensor view of image sensor data system 2 and 3 given their pose in 3D. Image sensor data 2 shall show instances *i*. Image sensor data 3 shall not only show single instances but pairs of instances *i* and *j*. Parameters of first machine learning system 10 may be adjusted with respect to a training objective. The training objective may be defined by an optimization of a difference between the refined node feature vector 12 of instance *i* and the corresponding feature vector 21 of instance *i* for all instances, 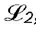 , and/or the training objective may be given by an optimization of a difference between refined edge feature vector 13 of instance pair *i* and *j* and the corresponding feature vector 31 of instance pair *i* and *j* for all instance pairs, 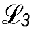 . A cosine similarity loss may be used in the training objective, 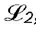 and/or 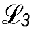 , to adjust, i.e. "pull", the graph feature space/embedding space of the first machine learning system 10 towards the embedding space of the second and third machine learning systems 20 and 30, i.e. the embedding space of the vision language models. Preferably, second and third machine learning system 20 and 30 shall share the same embedding space.

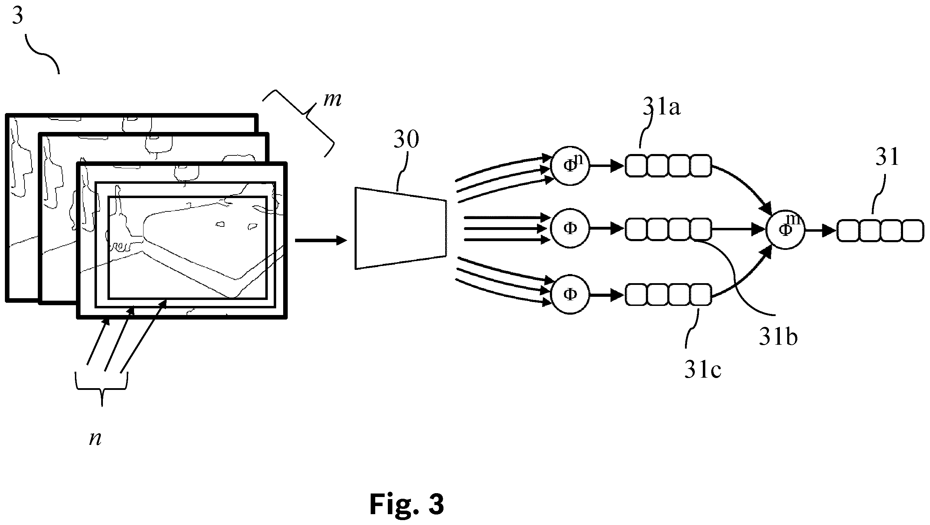

Figure 3 shows an exemplary embodiment of sub-steps in a method described herein, related to the determination of a feature vector 31 of instance pair *i* and *j* from 2-dimensional image sensor data 3 by the third machine learning system 30 for each pair of instances *i* and *j*. In coarse of the determination of feature vector 31, a set of *m* image sensor data comprising the instance pair *i* and *j* may be determined from the 2-dimensional image sensor data 3. In a next step, bounding boxes for instance *i* and instance *j* may be determined in each of the *m* image sensor data 3 comprising the instance pair *i* and *j*. In a next step, each of the *m* image sensor data with the bounding boxes for instance *i* and instance *j* may be cropped at *n* different scales to obtain for each of the *m* image sensor data *n* different cropped image sensor data. Each of the *n* cropped image sensor data may thereby comprise the bounding boxes of instance *i* and instance *j*. From each of the *n* different cropped image sensor data, a feature vector *ϕⁿ* of instance pair *i* and *j* may be determined. By averaging the *n* feature vectors *ϕⁿ* from the *n* different cropped image sensor data for each of the *m* image sensor data, *m* averaged feature vectors 31a, 31b, 31c, of instance pair *i* and *j* may be obtained. Finally, averaging the *m* obtained feature vectors 31a, 31b, 31c, of instance pair *i* and *j,* feature vector 31 of instance pair *i* and *j* may be obtained.

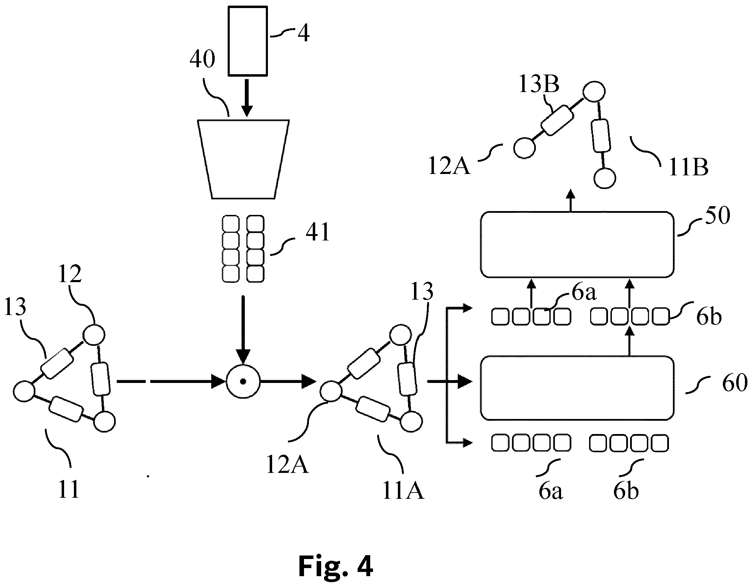

Figure 4 shows specific parts of an embodiment of a method described herein. Refined node feature vectors 12 and the refined edge feature vectors 13 of the refined graph structure 11 shall be refined node feature and refined edge feature vectors re-determined after adjusting parameters of the first machine learning system with respect to the training objective, e.g. according to the embodiment described in context of Figures 1 - 3. List of candidate instances 4 is provided, wherein each element of the list of candidate instances is a word or a text describing a possible instance in a 3-dimensional environment scene. List 4 may, among others, comprise the elements "chair, table, bed, floor, ..." describing elements possible situated in the 3-dimensional environment scene. Fourth machine learning system 40 may determine an embedding 41 for each element of the list 4 of candidate instances. In other words, the fourth machine leaning system maps the elements of the list 4 to feature vectors/embeddings 41 of a lower dimensional embedding space. Based on the refined graph structure 11, graph structure with labelled nodes 11A is determined by assigning for each refined node feature vector 12 with corresponding node in the refined graph structure 11 an element of the candidate list 4 to the corresponding node of the refined node feature vector 12. In this way, a labelled node 12A, labeled with the assigned element, may be obtained. The assignment is based on the highest similarity between the refined node feature vector and the embeddings of the elements of the candidate list. In other words, that element of list 4 may selected and assigned to the respective node, whose embedding has the highest similarity/smallest difference to the refined node feature vector 12. As similarity measure, the cosine similarity may be used. In other words, the list element whose text embedding provided by the fourth machine learning system 40 has the highest cosine similarity with a refined node feature vector 12 may be the prediction/class description for the respective node. Third preprocessing network 60 may determine input tokens for fifth machine learning system 50, based on refined edge feature vectors 13, a predefined query 6a and relationship prompts 6b. Relationship prompts 6b may comprise the labels 12A of the nodes connected by the respective edge in the graph structure with labelled nodes. An exemplary and non-limiting example for a relationship prompt may read: "What is the relationship between [label of node i] and [label of node j]?". Third preprocessing network 60 may be a QFormer network. Fifth machine learning system 50 may determine for each refined edge feature vector 13 a textual description 13B based on the determined input tokens, the predefined query 6a and the relationship prompts 6b. Accordingly, scene graph 11B may be determined from the graph structure with labelled nodes 11A by assigning the determined textual description 13B for each refined edge feature vector to the respective edge of the graph structure with labelled nodes. For the method to work out, fourth machine learning system 40 and first machine learning system 50 may map their respective input data to the same embedding space.

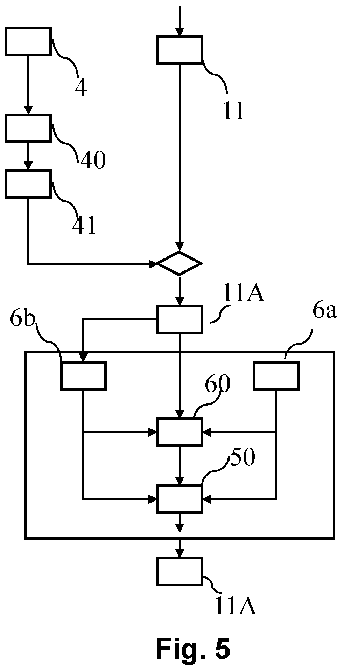

Figure 5 shows parts of an embodiment of the method described herein. Refined graph structure 11 with refined node feature vectors and refined edge feature vectors is determined after adjusting parameters of the first machine learning system with respect to the training objective. In other words, refined graph structure 11 is generated by trained machine learning model 10.

List of candidate instances 4 is provided, wherein each element of the list of candidate instances is a word or a text describing a possible instance in a 3-dimensional environment scene. List 4 may be defined by a user or provided by a system. Forth machine learning system 40 may determine an embedding 41 for each element of the list 4 of candidate instances. Fourth machine learning system 40 may be given by the language encoding part of a VLM, e.g. of CLIP. Based on the refined graph structure 11 a graph structure 11A with labelled nodes 12A is determined by assigning for each refined node feature vector 12A with corresponding node in the refined graph structure 11 an element of the candidate list 4 to the corresponding node of the refined node feature vector 12 based on the highest similarity between the refined node feature vector 12 and the embeddings of the elements of the candidate list 4. Graph 11A may contain textual descriptions/words 12A describing instances *i* at its nodes. However, graph 11A still contains the refined edge feature vectors at its edges. Third preprocessing network 60 may determine input tokens for fifth machine learning system 50 based on refined edge feature vectors 13, a predefined query 6a and relationship prompts 6b. Relationship prompt 6b may comprise the labels of the nodes connected by the respective edge in the graph structure with labelled nodes 11A. Predefined queries 6a may be pretrained and may guide the third preprocessing network 60 as well as the fifth machine learning system 50 to attend to relevant parts in the computation. Predefined query 6a may be given by IntructBLIP pretrained queries. Third preprocessing network 60 may translate the refined edge feature vectors and the relationship prompt into the token space of fifth machine learning system 50. A non-limiting example for a relationship prompt may be given by "What is the relation between [label of node i] and [label of node j]?", wherein the labels are taken from the nodes of graph 11A. Based on the determined input tokens, the predefined query 6a and the relationship prompts 6b, fifth machine learning system may determine for each refined edge feature vector a textual description 13B. For the method to work out, preferably, first, fourth and fifth machine learning system may map their respective input data to the same embedding space. Fifth machine learning system may be a Vicuna 7B model (https://lmsys.org/blog/2023-03-30-vicuna) using the Llama architecture (https://arxiv.org/abs/2302.13971), which may be one of the best open-source language models available. It may be noted that 7B refers to the 7 billion (trained) parameters of the Vicuna model. From the graph structure 11A with labelled nodes a scene graph 11 B may be determined by assigning the determined textual description 13B for each refined edge feature vector 13 to the respective edge of the graph structure 12B with labelled nodes.

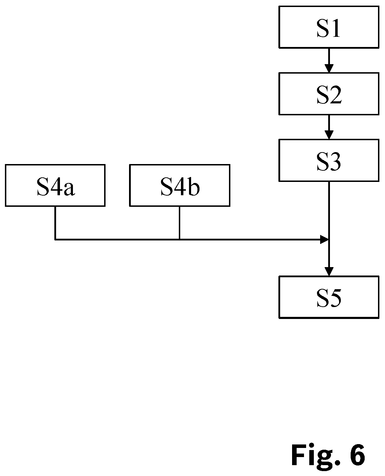

Figure 6 shows an embodiment of a method described herein. In method step S1, an initial node feature vector ϕᵢ for each instance *i* in the scene may be determined from the point cloud input data P by the first preprocessing network, and an initial edge feature vector for each pair of instances *i* and *j* in the scene may be determined from the point cloud input data by the second preprocessing network. In method step S2, initial node and initial edge feature vectors may be arranged in an initial graph structure by building triplets (*ϕᵢ*, *ϕᵢⱼ, ϕⱼ)*. Method step S3 may be given by determining a refined graph structure comprising refined node feature vectors and refined edge feature vectors by the graph neural network based on the initial graph structure. In method step S4a and S4b, which may or may not be carried out in parallel to method steps S1, S2, and/or S3, for each instance *l* in the scene a feature vector of instance *l* may be determined by a second machine learning system from 2-dimensional image sensor data (step S4a) and for each pair of instances *i* and *j* a feature vector of instance pair *i* and *j* may be determined by a third machine learning system from the 2-dimensional image sensor data. In method step S5, parameters of the first machine learning system may be adjusted with respect to a training objective, wherein the training objective may be defined by an optimization of a difference between the refined node feature vector of instance *i* and the corresponding feature vector of instance *i* for all instances and/or an optimization of a difference between refined edge feature vector of instance *i* and *j* and the corresponding feature vector of instance pair *i* and *j* for all instance pairs.

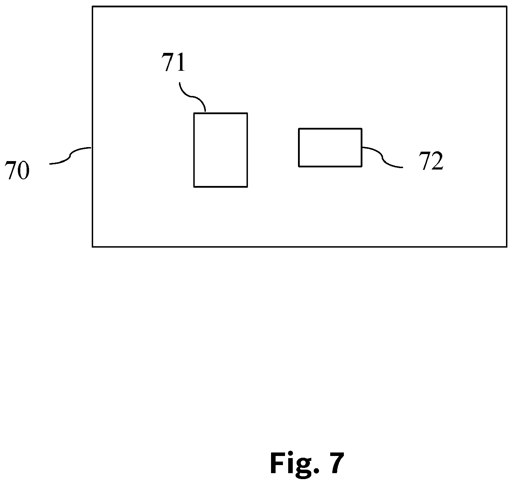

Figure 7 shows an exemplary embodiment of a data processing system 70, which comprises at least one processor 71 and at least one machine-readable storage medium 72, the machine-readable storage medium 72 containing instructions which, when executed by the processor 71, cause the data processing system 70 to carry out a method according to one of the aspects or embodiments of the invention described herein.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises *N* elements, wherein *N* is the number of elements in the plurality, the elements are assigned the integers from 1 to *N.* It may also be understood that elements of the plurality can be accessed by their index.

## Claims

1. Computer-implemented method of training a first machine learning system (10) for generating a graph representation of instances and their relationships in a 3-dimensional environment scene (1) from 3-dimensional point cloud input data *P*,
wherein the first machine learning system (10) comprises two preprocessing networks (101, 102) and a graph neural network (103),
the method comprising the steps:
- determining by the first preprocessing network (101) for each instance *i* in the scene an initial node feature vector ϕᵢ from the point cloud input data P and determining by the second preprocessing network (102) for each pair of instances *i* and *j* in the scene an initial edge feature vector from the point cloud input data *P*, (S1),
- arranging initial node and initial edge feature vectors in an initial graph structure by building triplets (*ϕᵢ*, *ϕᵢⱼ, ϕⱼ*), (S2),
- determining a refined graph structure (11) comprising refined node feature vectors (12) and refined edge feature vectors (13) by the graph neural network (103) based on the initial graph structure, (S3),
- determining by a second machine learning system (20) for each instance *i* in the scene a feature vector (21) of instance *i* from 2-dimensional image sensor data (2), (S4a), wherein the 2-dimensional image sensor data (2) refer to the 3-dimensional environment scene, and determining by a third machine learning system (30) for each pair of instances *i* and *j* a feature vector of instance (31) pair *i* and *j* from the 2-dimensional image sensor data (3), (S4b),
- adjusting parameters of the first machine learning system (10) with respect to a training objective, wherein the training objective is defined by an optimization of a difference between the refined node feature vector (12) of instance *i* and the corresponding feature vector (21) of instance *i* for all instances and/or an optimization of a difference between refined edge feature vector (13) of instance *i* and *j* and the corresponding feature vector (31) of instance pair *i* and *j* for all instance pairs, (S5).

2. The method according to claim 1, wherein the first and the second preprocessing networks (101, 102) are PointNets.

3. The method according to any of the preceding claims, wherein the second machine learning system (20) is an OpenSeg model and wherein the third machine learning system (30) is an InstructBLIP model.

4. The method according to any of the preceding claims, wherein the 3-dimensional point cloud input data (*P*) are acquired with a LiDAR sensor, a RADAR sensor, a camera with a depth sensor or video-camera with a depth sensor.

5. The method according to any of the preceding claims, further comprising the step:
- controlling a robot based on the refined graph structure (11), wherein the refined node feature vectors (12) and refined edge feature vectors (13) are determined by the first machine learning system (10) after adjusting parameters of first machine learning system (10) with respect to the training objective.

6. The method according to any of the preceding claims, wherein determining by the second machine learning system (20) for each instance *i* in the scene a feature vector (21) of instance *i* from the 2-dimensional image sensor data (2) as an input comprises the following steps for each instance *i*:
- determining a set of *k* image sensor data comprising instance *i* from the 2-dimensional image sensor data (2),
- determining a feature vector of instance *i* from each of the *k* image sensor data comprising instance *i*,
- obtaining a feature vector (21) of instance *i* by averaging the *k* determined feature vectors of instance *i*.

7. The method according to any of the preceding claims, wherein determining by the third machine learning system (30) for each pair of instances *i* and *j* a feature vector (31) of instance pair *i* and *j* from the 2-dimensional image sensor data (3) comprises the following steps:
- determining a set of *m* image sensor data comprising the instance pair *i* and *j* from the 2-dimensional image sensor data (3),
- determining bounding boxes for instance *i* and instance *j* in each of the *m* image sensor data comprising the instance pair *i* and *j*,
- cropping each of the *m* image sensor data with the bounding boxes for instance *i* and instance *j* at *n* different scales to obtain for each of the *m* image sensor data *n* different cropped image sensor data, wherein each of the cropped image sensor data comprises the bounding boxes of instance *i* and instance *j*,
- determining a feature vector of instance pair *i* and *j* from each of the *n* different cropped image sensor data,
- obtaining a feature vector (31) of instance pair *i* and *j* by first averaging the *n* feature vectors from the *n* different cropped image sensor data for each of the *m* image sensor data to obtain *m* averaged feature vectors (31a) of instance pair *i* and *j* and then averaging the *m* obtained feature vectors of instance pair i and *j*.

8. The method according to any of the preceding claims,
wherein the refined node feature vectors (12) and the refined edge feature vectors (13) of the refined graph structure (11) are re-determined after adjusting parameters of the first machine learning system with respect to the training objective,
wherein a list of candidate instances (4) is provided, wherein each element of the list of candidate instances (4) is a word or a text describing a possible instance in a 3-dimensional environment scene (1), and
wherein a fourth machine learning system (40), a third preprocessing network (60) and a fifth machine learning system (50) are provided, wherein the fourth machine learning system (40) and the first machine learning system (50) map their respective input data to the same embedding space,
the method further comprising the steps:
- determining by the fourth machine learning system (40) an embedding for each element of the list of candidate instances (4),
- determining a graph structure with labelled nodes (11A) based on the refined graph structure (11) by assigning for each refined node feature vector (12) with corresponding node in the refined graph structure (11) an element of the candidate list (4) as a label to the corresponding node of the refined node feature vector (12) based on the highest similarity between the refined node feature vector (12) and the embeddings of the elements of the candidate list (4),
- determining input tokens by the third preprocessing network based on the refined edge feature vectors (13), a predefined query (6a) and relationship prompts (6b), wherein a relationship prompt (6b) comprises the labels of the nodes connected by the respective edge in the graph structure with labelled nodes (11A),
- determining by the fifth machine learning system (50) for each refined edge feature vector (13) a textual description based on the determined input tokens, the predefined query (6a) and the relationship prompts (6b),
- determining a scene graph (11B) from the graph structure with labelled nodes (11A) by assigning the determined textual description for each refined edge feature vector (13) to the respective edge of the graph structure with labelled nodes (11A).

9. The method according to claim 8, further comprising the step:
- validating the scene graph (11B) by a user and/or controlling a robot based on the scene graph.

10. System configured to carry out the method according to any of the claims 1 to 9.

11. Computer program that is configured to cause a computer to carry out the method according to any one of the claims 1 to 9 if the computer program is carried out by a processor.

12. Machine-readable storage medium on which the computer program according to claim 11 is stored.
